# EUROPEAN PATENT APPLICATION

(11) **EP 4 740 721 A1**
(43) Date of publication of application: **13.05.2026**
(21) Application number: 25214287.2
(22) Date of filing: 07.11.2025
(51) Int. Cl.: A01D 34/67, A01D 34/82

(54) **MANUALLY GUIDED MOBILE DEVICE FOR GROUND MAINTENANCE PROVIDED WITH A TILT-ADJUSTABLE HANDLEBAR**

(30) Priority: 07.11.2024 IT 202400025095
(71) Applicant: Stiga S.p.A., 31033 Castelfranco Veneto (TV) (IT)
(72) Inventor: D'AGOSTINI, Mauro, 35018 San Martino di Lupari (PD) (IT); BACCHIN, Gian Luca, 31033 Castelfranco Veneto (TV) (IT); ZANOLIN, Alessandro, 35010 Trebaseleghe (PD) (IT)
(74) Representative: PGA S.p.A.

(57) **Abstract**

The present invention relates to a mobile device for the maintenance of lands comprising movement means for moving within a work area, a frame with tools for maintenance operations and a handle allowing an operator to guide the device. The handle includes a first member fixed to the frame and a second member with a gripping portion for the user, the latter rotatable with respect to the first member. The handle also comprises a joint with couplings that allow to lock or unlock the rotation between the two members in different angular positions, thanks to a tilting element that controls the engagement of the couplings. In accordance with further aspects, the device comprises a control lever rotatable relative to the frame to allow an operator to adjust an inclination of the handle.

## Description

### FIELD OF THE INVENTION

The present invention relates to a manually guided mobile device for the maintenance of lands, for example gardens, lawns or agricultural land. In particular, the mobile device may be a lawn mower having a work tool, for example the cutting blade.

The present invention also relates to a method for the maintenance of lands by means of said mobile device.

### STATE OF THE ART

In the field of gardening and maintenance of the land, mobile devices such as lawn mowers, soil tillers and aerators are commonly used to cover the entire intended working area. During the operation, some areas, such as perimeters, boundaries or central areas with obstacles, can be difficult to reach effectively, compromising the overall quality of the work. In manually guided devices, the operator may encounter difficulties in manoeuvring the device around such obstacles, due to the dimensions of the device in height or width, which may interfere with perimeter elements such as hedges.

To facilitate use in perimeter areas, some existing solutions provide systems for adjusting the height or inclination of the handlebar. For example, in patent EP3466237A1 a lawn mower is described that integrates a handlebar composed of two members: a first element fixed to the frame of the lawn mower and a second element that can be gripped by the user. Among them, a joint is inserted that allows a rotation of the second member with respect to the first. This rotation is obtained by means of a mechanism of tensioning cables connected to the joint. When the user presses one of the buttons on the handlebar, the tensioning cables are activated, causing the disengagement of a locking element and thus allowing the rotation of the second member with respect to the first.

This configuration offers some flexibility in the manoeuvrability of the device, but also has some limitations. The mechanical complexity of the tensioning cable system, in fact, can lead to problems of wear, breakage and require frequent maintenance interventions, reducing the reliability and overall life of the device. Solutions belonging to the state of the art can therefore be improved in certain respects. Continuing with the description of the state of the art, the adjustment of the height or inclination of the handlebar in the gardening devices represents a further critical aspect, and the existing solutions are often complex and impractical for the operator. For example, in European patent EP3099155B1 an inclination adjustment mechanism is described comprising a handlebar connected to the frame by a pin which fixes it in a specific position. To adjust the inclination, the operator must unscrew a locking knob and remove the pin, thus allowing the handlebar to be moved. Once the desired new inclination is reached, the pin must be reinserted and locked again to secure the handlebar firmly.

The procedure of extraction and reinsertion of the pin, although effective in ensuring stability, requires careful manual intervention, slowing down the adjustment process and proving not easy for the user.

These systems can therefore be improved in certain respects.

### OBJECT OF THE INVENTION

Therefore, the object of the present invention is to solve at least one of the drawbacks and/or limitations of the previous solutions.

A first object is to simplify the operations of adjusting the handlebar, making the use of the mobile device more practical and easy for the operator.

A further object is to ensure greater durability and reliability of the handlebar, reducing wear on mechanical components and the need for frequent maintenance interventions.

A further object is to allow an intuitive and quick adjustment of the inclination of the handlebar, eliminating the complexity of manual unlocking and repositioning operations.

A further object is to make available a device with a compact and resistant joint, able to integrate into the device without adding bulk.

A further object is to allow the operator to easily adapt the handlebar to the specific conditions of the ground and the obstacles present, facilitating access and manoeuvrability even in the perimeter or border areas of the work area.

A further object is to reduce operator fatigue, allowing a smooth and immediate adjustment of the handlebar, optimizing comfort and ergonomics during the use of the device.

These objects and others, which will appear more from the following description, are substantially achieved by a mobile device for the maintenance of lands in accordance with one or more of the claims and/or the following aspects.

### SUMMARY

Aspects of the invention are described here below.

In a 1st aspect there is provided a mobile device for the maintenance of lands, in particular lawns or gardens, comprising:
- movement means (2) configured to allow a movement of the mobile device within a work area,
- a frame (3) comprising at least one work tool for performing maintenance operations on the work area.

In a 1st-bis aspect according to the preceding aspect the mobile device comprises:
- a handle (4) configured to allow an operator to guide and optionally move said mobile device within the work area, wherein said handle (4) comprises:
   ∘ a first member (30) constrained to the frame (3),
   ∘ a second member (31) comprising a gripping portion (6a) configured to be gripped by a user, said second member (31) being rotatably movable relative to the first member (30) about a joint axis (S),
   ∘ a joint (32) which, at least in an unlocked condition, rotationally constrains the first member (30) to the second member (31),
wherein the joint (32) comprises:
- one or more couplings (33) configured to selectively engage the first member (30) to the second member (31) in a plurality of angular positions, preventing a relative rotation between the first member (30) and the second member (31) of the handle (4).

In a 2nd aspect according to the preceding aspect the joint (32) comprises a tilting element (34) carrying said one or more couplings (33), the tilting element (34) being configured to oscillate with respect to the first member (30) and the second member (31) of the handle (4), positioning said one or more couplings (33) to engage or disengage the first member (30) to the second member (31).

In a 3rd aspect according to any one of the preceding aspects the joint (32) comprises:
- a first plate (35) carried on the first member (30) of the handle (4),
- a second plate (36) carried by the second member (31) of the handle (4) and rotatably movable relative to the first member (30).

In a 3rd-bis aspect according to the preceding aspect, the first plate (35) and the second plate (36) of the handle (4) have respective abutment surfaces (35a, 36a) facing each other to define a rotation plane of the second plate (36), parallel to each of said abutment surfaces (35a, 36a) of the first plate (35) and of the second plate (36).

In a 4th aspect according to the preceding aspect in combination with the 2nd aspect the tilting element (34) is rotatably movable about a rotation axis (X) parallel to the rotation plane.

In a 5th aspect according to any one of the two preceding aspects the joint axis (S) is transverse, optionally orthogonal, to the rotation plane and/or to the rotation axis (X).

In a 6th aspect according to any one of the four preceding aspects in combination with the 2nd aspect the tilting element (34) is carried by the second plate (36) of the joint (32), being thus movable about the joint axis (S) integrally with the second plate (36).

In a 7th aspect according to any one of the aspects, the joint (32), optionally the second plate (36), comprises a hollow casing (39) for housing therein each of said one or more couplings (33) and optionally the tilting element (34).

In an 8th aspect according to any one of the preceding aspects in combination with the 2nd aspect, the joint (32) is movable between:
- a locked position in which the tilting element (34) positions said one or more couplings (33) to engage the first member (30) of the handle (4) and lock it with respect to the second member (31),
- an unlocked position in which the tilting element (34) moves said one or more couplings (33) away from the first member (30) to disengage it from the second member (31) and allow a relative rotation between the first and second member (30, 31).

In a 9th aspect according to any one of the preceding aspects in combination with the 3rd aspect, the first plate (35) comprises a plurality of recesses (37) defining respective seats for engaging said one or more couplings (33).

In a 10th aspect according to the preceding aspect the recesses (37) are angularly offset from each other.

In an 11th aspect according to the preceding aspect the recesses (37) are angularly offset from each other by an angle between 2° and 200°, optionally between 5° and 180°.

In a 12th aspect according to any one of the four preceding aspects, the first plate (35) comprises a sliding track (38) connecting the recesses (37) to each other and configured to guide, during the movement of the second plate (36) with respect to the first plate (35), said one or more couplings (33) between two adjacent recesses (37).

In a 13th aspect according to the preceding aspect, each of said one or more couplings (33), when it contacts the sliding track (38) during the movement of the second plate (36) with respect to the first plate (35), locks the joint (32) in the unlocked position, preventing it from passing to the locked position until it reaches a further recess (37) to which at least one, optionally each, of said one or more couplings (33) is engageable.

In a 14th aspect according to any one of the two preceding aspects each recess (37) of said plurality and the sliding track (38) are made on the abutment surface (35a) of the first plate (35) of the first member (30).

In a 15th aspect according to any one of the preceding three aspects each recess (37) of said plurality and the sliding track (38) are made on a side (35b) of the first plate (35) transverse to the abutment surface (35a).

In a 16th aspect according to any one of the four preceding aspects, each recess (37) has an opening of access (52) to the seat for housing the couplings (33), made on the abutment surface of the first plate (35) and adjacent to the sliding track (38).

In a 17th aspect according to any one of the preceding aspects the joint (32) comprises a plurality of couplings (33), each configured to selectively engage the first member (30) to the second member (31) at a plurality of angular positions.

In an 18th aspect according to the preceding aspect in combination with the 9th aspect, the first plate (35) of the first member (30) comprises, in each of said angular positions, recesses (37) in number equal to said plurality of couplings (33).

In a 19th aspect according to any one of the preceding aspects in combination with the 3rd aspect, the first plate (35) comprises two or more recesses for each angular position.

In a 20th aspect according to any one of the preceding aspects said one or more couplings (33) are movable relative to each other between the first and the second member (30, 31), along a movement trajectory (D) having at least one straight section parallel to the joint axis (S) of the second member (31) or inclined by an acute angle not exceeding 10°.

In a 21st aspect according to the preceding aspect in combination with aspect 3bis, the movement trajectory (D) of said one or more couplings (33) is transverse to the rotation plane.

In a 22nd aspect according to any one of the two preceding aspects, the sliding track (38) has a contact surface transverse to the movement trajectory (D) of each of said one or more couplings (33).

In a 23rd aspect according to any one of the preceding aspects in combination with the 3rd aspect, the joint (32) comprises a bearing (40) interposed between the first and the second plate (35, 36) to facilitate the movement of the second plate (36) with respect to the first plate (35).

In a 24th aspect according to the preceding aspect opposite faces of the bearing (40) contact the respective abutment surfaces of the first and second plates (35, 36).

In a 25th aspect according to any one of the aspects the joint (32) comprises one or more elastic elements (43), optionally one or more springs, acting on said one or more couplings (33).

In a 26th aspect according to any one of the preceding aspects in combination with the 2nd aspect, the joint (32) comprises one or more elastic elements (43), optionally one or more springs, acting on the tilting element (34).

In a 27th aspect according to any one of the preceding aspects in combination with the 8th aspect, said one or more elastic elements (43) are configured to cause a movement of each of said one or more couplings (33) and/or the tilting element (34) such as to involve the passage of the joint (32) from the unlocked position to the locked position.

In a 28th aspect according to the preceding aspect in combination with the 7th aspect said one or more elastic elements (43) are located internally to the hollow casing (39) of the joint (32).

In a 29th aspect according to any one of the two preceding aspects in combination with the 17th aspect the joint (32) comprises a plurality of elastic elements (43) in number equal to said plurality of couplings (33).

In a 30th aspect according to any one of the preceding aspects in combination with the 2nd aspect, the joint (32) comprises a drive (41) contactable by an operator for moving the tilting element (34) with respect to the first member (30) and the second member (31) of the handle (4).

In a 31st aspect according to the preceding aspect in combination with the 8th aspect the drive (41) is configured to move the tilting element (34) in such a way as to cause the joint (32) to pass from the locked position to the unlocked position.

In a 32nd aspect according to any one of the preceding two aspects in combination with the 7th aspect, the drive (41) defines an outer surface of the hollow casing (39) of the joint (32).

In a 33rd aspect according to any one of the preceding three aspects in combination with aspect 3bis the drive (41) is rotatably movable about a drive axis (A) parallel to the rotation plane.

In a 34th aspect according to any one of the preceding four aspects the drive (41) comprises:
- a gripping surface (16a) intended to be contacted by a user,
- an activation portion (42) engageable with the tilting element (34).

In a 35th aspect according to the preceding aspect the activation portion (42) is distinct from the tilting element (34) and intended to contact the same tilting element (34) when the gripping surface (16a) is contacted by the user.

In a 36th aspect according to any one of the two preceding aspects the activation portion (42) is engaged to the tilting element (34) by a rotational or roto-translational constraint.

In a 37th aspect according to any one of the preceding three aspects in combination with the 7th aspect, the activation portion (42) of the drive (41) is positioned internally to the hollow casing (39) of the joint (32).

In a 38th aspect according to any one of the preceding aspects in combination with the 2nd and 3rd aspect the tilting element (34) comprises a central body (44) rotationally constrained to the first plate (35) of the first member (30).

In a 39th aspect according to the preceding aspect when dependent on the 40th aspect the tilting element (34) comprises an interaction portion (46) connected to the central body (44) and configured to interact with the drive (41) to cause a movement of the same tilting element (34).

In a 40th aspect according to the preceding aspect when dependent on the 34th aspect the interaction portion (46) has an elongated body emerging from the central body (44) approaching the gripping surface (16a) of the drive (41).

In a 41st aspect according to any one of the preceding two aspects when dependent on the 34th aspect the activation portion (42) of the drive (41) is a protrusion emerging from the gripping surface (16a) of the drive (41) approaching the interaction portion (46) of the tilting element (34).

In a 42nd aspect according to the preceding two aspects the elongated body of the interaction portion (46) is transverse to the protrusion of the activation portion (42).

In a 43rd aspect according to any one of the preceding aspects when dependent on the 39th aspect said one or more couplings (33) are located at an end of the central body (44) opposite the interaction portion (46).

In a 44th aspect according to any one of the aspects when dependent on the 2nd aspect, said one or more couplings are made in one piece with the tilting element (34).

In a 45th aspect according to any one of the aspects when dependent on the 30th and 38th aspect said one or more elastic elements (43) act on the end of the central body (44) of the tilting element (34) where said one or more couplings (33) are located.

In a 46th aspect according to any one of the aspects when dependent on the 39th aspect the interaction portion (46) of the tilting element (34) has an elongated body engaged, at opposite ends:
- to the central body (44) of the same tilting element (34) by means of a rotational constraint, and
- to the drive (41), optionally to the activation portion (42) of the drive (41), by means of a rotational or roto-translational constraint.

In a 47th aspect according to any one of the aspects when dependent on the 39th aspect,
the interaction portion (46) of the tilting element (34) is spaced from the gripping surface (16a) of the same drive (41).

In a 48th aspect according to any one of the aspects when dependent on the 39th aspect the interaction portion (46) is located at a central body (44) of the tilting element (34), on the opposite side to the gripping surface (16a) of the drive (41).

In a 49th aspect according to any one of the preceding aspects when dependent on the 39th aspect, the interaction portion (46) of the tilting member (34) is configured to rotate relative to the central body (44) of the tilting member (34) and is configured to translate and rotate relative to the drive (41).

In a 50th aspect according to any one of the preceding aspects when dependent on the 39th aspect, the interaction portion (46) of the tilting element (34) comprises a pin (48) housed inside a slot (47) made on the drive (41), optionally on the activation portion (42), said pin being configured to rotate and translate inside the slot (47).

In a 51st aspect according to any one of the preceding aspects when dependent on the 39th aspect, said one or more couplings (33) are located at an end of the central body (44) proximate to the interaction portion (46).

In a 52nd aspect according to any one of the aspects when dependent on the 38th aspect, said one or more couplings (33) being made in one piece with the central body (44) of the tilting element (34).

In a 53rd aspect according to any one of the aspects when dependent on the 38th aspect, said one or more elastic elements (43) act on the end of the central body (44) of the tilting element (34) where said one or more couplings (33) are located.

In a 54th aspect according to any one of the preceding aspects when dependent on the 39th aspect, wherein the interaction portion (46) has an elongated body emerging from the central body (44) away from the gripping surface (16a) of the drive (41).

In a 55th aspect according to any one of the preceding aspects when dependent on the 39th aspect, the interaction portion (46) is engaged to the drive (41), optionally to the activation portion (42) of the drive (41), by a rotational or roto-translational constraint.

In a 56th aspect according to any one of the preceding aspects when dependent on the 34th aspect, the activation portion (42) of the drive (41) is spaced from the gripping surface (16a) of the same drive (41).

In a 57th aspect according to any one of the preceding aspects when dependent on the 39th aspect, the interaction portion (46) of the tilting element (34) is configured to rotate integrally with the central body (44) of the tilting element (34) and is configured to translate and rotate with respect to the drive (41).

In a 58th aspect according to any one of the preceding aspects when dependent on the 39th aspect, the interaction portion (46) of the tilting element (34) comprises a pin (48) housed inside a slot (47) made on the drive (41), optionally on the activation portion (42), said pin being configured to rotate and translate inside the slot (47).

In a 59th aspect according to any one of the aspects when dependent on the 2nd aspect the tilting element (34) has an "L" or "V" shape.

In a 60th aspect according to the preceding aspect the central body (44) defines a central area of the same tilting element (34).

In a 61st aspect according to any one of the preceding aspects when dependent on the 39th aspect, the interaction portion (46) is located at an end of the tilting member (34).

In a 62nd aspect according to any one of the preceding aspects when dependent on the 39th aspect said one or more couplings (33) are located at an end of the central body (44) opposite the interaction portion (46).

In a 63rd aspect according to any one of the preceding aspects when dependent on the 38th aspect, said one or more couplings are hinged to the central body (44) of the tilting element (34).

In a 64th aspect according to any one of the preceding aspects when dependent on the 34th aspect said couplings (33) are interposed between the tilting element (34) and the contact surface (16a) of the drive (41).

In a 65th aspect according to any one of the aspects when dependent on the 3rd aspect the second plate (36) of the second member (31) comprises at least one cylindrical cavity (49) defining a sliding seat of a respective one of said one or more couplings (33).

In a 66th aspect according to the preceding aspect each cylindrical cavity (49) is terminally delimited by an opening (50) facing a respective recess (37) and configured to allow the passage of one of said one or more couplings (33) in engagement with a respective recess (37).

In a 67th aspect according to any one of the two preceding aspects each cylindrical cavity (49) is terminally delimited by an end plate (51) defining an end stop of said coupling (33).

In a 68th aspect according to the preceding aspect the end plate (51) is perforated to allow the passage of said coupling (33) in engagement with one/the end of the central body (44) of the tilting element (34) to which it is hinged.

In a 69th aspect according to any one of the preceding four aspects, wherein each of said one or more elastic elements (43) acts inside a cylindrical cavity (49) of the second plate (36) interposed between a respective one of said one or more couplings (33) and the end plate (51).

In a 70th aspect there is provided a method for rotationally unlocking a handle (4) of a mobile device (1) in accordance with any of the preceding aspects.

In a 71st aspect according to the preceding aspect the method comprises a step of contacting the joint (32) to cause a rotation of the tilting element (34) such as to disengage said one or more couplings (33) from the first member (30) and allow a rotation of the second member (31) relative to the first member (30).

In a 72nd aspect according to the preceding aspect the step of contacting the joint (32) comprises pressing the gripping surface (16a) of the drive (41) to cause a rotation of the tilting element (34) such as to disengage said one or more couplings (33) from the first member (30) of the handle (4).

In a 73rd aspect according to any one of the two preceding aspects subsequent to the step of contacting the joint (32), the method further comprises a step of rotating the second member (31) with respect to the first member (30) by sliding said one or more couplings (33) on the sliding track (38) until reaching recesses (37) to which said one or more couplings (33) engage.

In a 74th aspect according to any one of the preceding aspects 1 to 69, the mobile device comprises:
- a handle (4) configured to allow an operator to guide and optionally move said mobile device within the work area,
- at least one control lever (6) carried by the frame (3) and comprising:
   o a rotatable body (7) having an eccentric hole (13) to which an end of the handle (4) is engageable, said rotatable body (7) being rotatably movable relative to the frame (3) about an orientation axis (Y),
   o a gripping portion (8) integral with the rotatable body (7) and configured to allow it to rotate with respect to the frame (3) when operated by an operator.

In a 74th aspect according to the preceding aspect, the mobile device comprises:
- a closing knob (9) selectively in contact with the rotatable body (7) of the control lever (6) to block its rotation with respect to the frame (3).

In a 75th aspect according to the preceding aspect, the gripping portion (8) of the control lever (6) is interposed between the handle (4) and the closing knob (9) along a direction parallel to the orientation axis of the rotatable body (7).

In a 76th aspect according to any one of the two preceding aspects the closing knob (9) is configurable between:
- a fixing condition in which said closing knob (9) contacts the rotatable body (7) of the control lever (6) to prevent movement of the handle (4) with respect to the frame (3),
- an adjustment condition in which the closing knob (9) is spaced from the rotatable body (7) of the control lever (6), allowing the gripping portion (8) of the control lever (6) to rotate freely with respect to the frame (3) in a plurality of angular positions, so as to progressively vary the inclination of the operating handlebar (4).

In a 77th aspect according to any one of the preceding four aspects the operating handlebar (4) is engaged to the rotatable body (7) of the control lever (6) by a pin (10), optionally a threaded bolt.

In a 78th aspect according to the preceding aspect the control lever (6), in the condition of adjustment of the closing knob (9), moves the pin (10) along a circular trajectory to determine a contextual variation in height of the handlebar (4).

In a 79th aspect according to any one of the preceding aspects from 74th to 78th the gripping portion (8) of the control lever (6), optionally in the condition of adjustment of the joint (7), is rotatable relative to the frame (3) along a circular trajectory, optionally said gripping portion (8) of the control lever (6) travelling along a 360° angle.

In an 80th aspect according to the two preceding aspects the circular trajectory travelled by the gripping portion (8) of the control lever (6) is concentric to the circular trajectory travelled by the pin (10).

In an 81st aspect according to any one of the aspects from 74th to 80th the gripping portion (8) of the control lever (6) is positioned radially outside the closing knob (9).

In an 82nd aspect according to any one of the aspects from 74th to 83rd the gripping portion (8) of the control lever (6) defines an end of the control lever (6) located opposite the rotatable body (7).

In an 83rd aspect according to any one of the preceding aspects from 74th to 82nd the control lever (6) comprises a shoulder (14) extending radially around the rotatable body (7), said shoulder being configured to contact the frame (3) and prevent a movement of the control lever (6) along a direction parallel to the orientation axis (Y) of the rotatable body (7).

In an 84th aspect according to any one of the preceding aspects from 74th to 83rd the control lever (6) comprises an intermediate body (12) connecting the gripping portion (8) to the shoulder (14).

In an 85th aspect according to any one of the preceding aspects from 74th to 84th the device comprises at least one fixing bracket (5) constrained to the frame (3) and couplable to the handle (4) by means of the control lever (6), optionally by means of the rotatable body (7) of the control lever (6). In an 86th aspect according to the preceding aspect the fixing bracket (5) has a through opening (11) defining a seat for housing the rotatable body (7) of the control lever (6).

In an 87th aspect according to the preceding aspect said through opening (11) being delimited by a perimeter edge defining a sliding guide of the rotatable body (7) when rotated relative to the frame (3). In an 88th aspect according to any one of the preceding aspects from 74th to 87th the device comprises:
- a plurality of control levers (6) carried by the frame (3) and having respective rotatable bodies (7) with eccentric holes (13) in which respective ends of the handle (4) are engageable, each control lever (6) having a gripping portion (8) integral with a respective rotatable body and configured to allow rotation of the rotatable body with respect to the frame (3) when operated by an operator.

In an 89th aspect according to any one of the preceding aspects from 74th to 88th the device comprises a plurality of fixing brackets (5) constrained to the frame (3) and couplable to the end of the handle (4) by means of a respective control lever (6).

In a 90th aspect there is provided a method of adjusting the inclination of a handle (4) of a mobile device in accordance with any of the preceding aspects from 74th to 89th.

In a 91st aspect according to the preceding aspect the method comprises the following steps:
- decoupling the closing knob (5) from the control lever (6) to allow it to move with respect to the frame (3),
- rotating the control lever (6) with respect to the frame (3) at any one of a plurality of angular positions to adjust the position of the rotatable body (7) and vary the inclination of the handle (4) with respect to the frame (3),
- coupling again the closing knob (5) to the control lever (6) to block the handle (4) in the selected position

In a 92nd aspect according to the preceding aspect during the step of rotating the control lever (6) with respect to the frame (3) the pin remains engaged to the closing knob (9) and/or to the rotatable body (7).

In a 93rd aspect according to any of the two preceding aspects, the step of rotating the control lever (6) with respect to the frame (3) does not provide for the extraction, either complete or partial, of the pin (10) from the rotatable body (7) of the control lever (6) and/or from the closing knob (9).

### BRIEF DESCRIPTION OF THE DRAWINGS

Some embodiments and aspects of the invention will be described hereinafter with reference to the accompanying drawings, given merely for illustrative, non-limiting purposes in which:
- Figures 1 and 3 are perspective views of a mobile device in accordance with the present disclosure,
- Figure 2 is a detailed view of the mobile device of Figure 1,
- Figure 4 is a detailed view of the mobile device of Figure 3,
- Figures 5 and 6 are perspective views of a control lever of the mobile device in accordance with the present disclosure,
- Figures 7 and 8 are perspective views of the control lever shown in Figures 5 and 6, in engagement with a locking bracket of the mobile device in accordance with the present disclosure,
- Figure 9 is a cross-sectional view of the fixing bracket of Figure 8,
- Figure 10 is a side view of a handle of the mobile device in accordance with the present disclosure in a raised and lowered position,
- Figures 11 and 12 are top and perspective views of a handle of the mobile device in accordance with the present disclosure, respectively,
- Figures 13 and 14 are top and perspective views respectively of a handle of the mobile device in accordance with the present disclosure, having a second member rotated with respect to a first member,
- Figures 15 and 16 show a handle in accordance with the present disclosure in a folded position,
- Figure 17 is a perspective view of a joint of the mobile device in accordance with the present disclosure,
- Figure 18 is a perspective split view of the joint of Figure 17,
- Figure 19 is a side sectional view of the joint of Figure 17,
- Figure 20 is an exploded view of a joint of Figure 17,
- Figure 21 is an exploded perspective view of a variant of the mobile device joint in accordance with the present disclosure,
- Figure 22 is a side sectional view of the joint of Figure 21,
- Figure 23 is an exploded view of a joint of Figure 21,
- Figure 24 is an exploded perspective view of a further variant of the joint of the mobile device in accordance with the present disclosure,
- Figure 25 is a side sectional view of the joint of Figure 24,
- Figure 26 is an exploded view of a joint of Figure 24.

### DEFINITIONS AND CONVENTIONS

It should be noted that in the present detailed description, corresponding parts illustrated in the various Figures are indicated with the same numerical references. The Figures could illustrate the object of the invention through non-scale depictions; therefore, the parts and components illustrated in the Figures related to the object of the invention could exclusively relate to schematic depictions.

### DETAILED DESCRIPTION

### Mobile device

With 1 a mobile device 1 configured to perform maintenance operations, for example trimming the turf, within a working area of a land, for example a lawn, a garden or an agricultural land has been overall indicated.

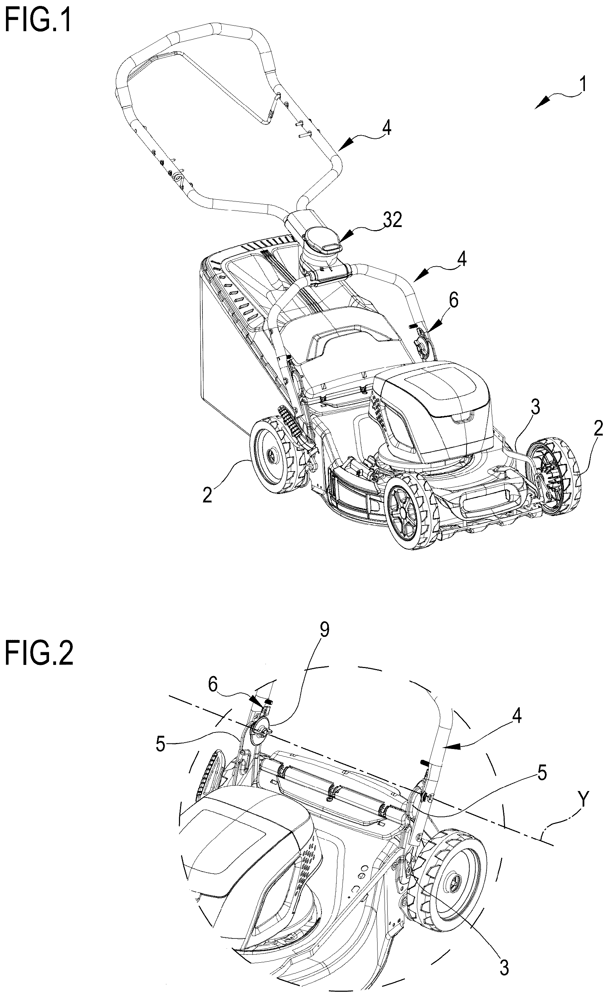

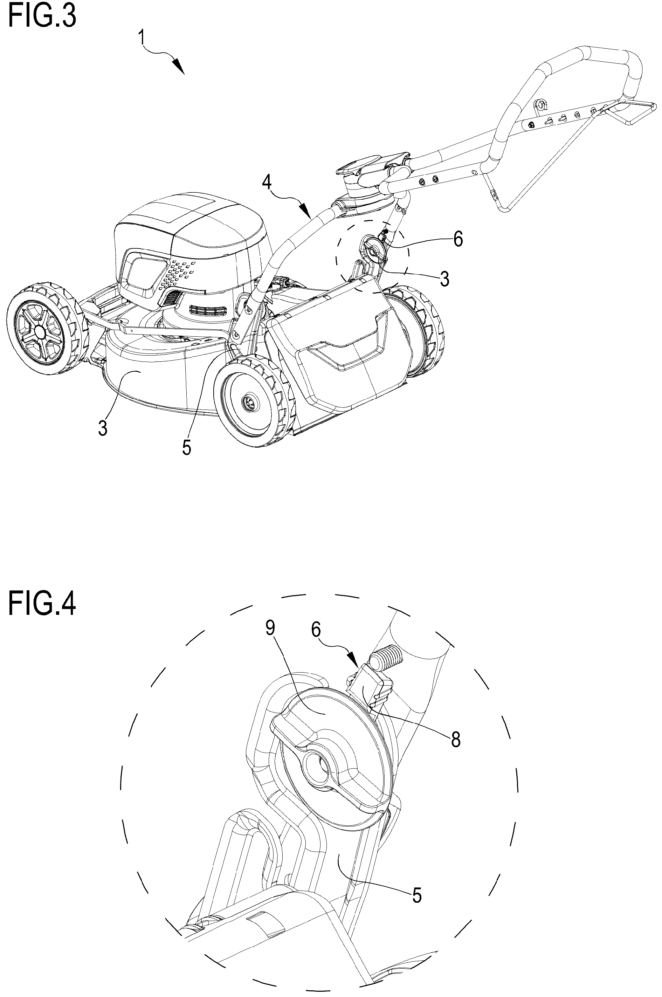

The mobile device, represented in Figures 1 and 3, can be a device driven or pushed by a user. In particular, the mobile device 1 may comprise a work unit 1a provided with movement means 2, for example one or more wheels, rollers or motorised tracks, adapted to cause the advancement of the mobile device. In an example, the work unit 1a may comprise one or more motors for driving the movement means and the work tools. Alternatively, the mobile device may for example comprise idle wheels, rollers or tracks, moved as a result of the thrust exerted by the user.

The mobile device 1, and in particular the work unit 1a, further comprises a frame 3 carrying the movement means 2, and one or more work tools (such as for example blades, tools for tilling the land or other tools still motorized or not and per se known and therefore not illustrated) configured to perform maintenance operations inside the working area.

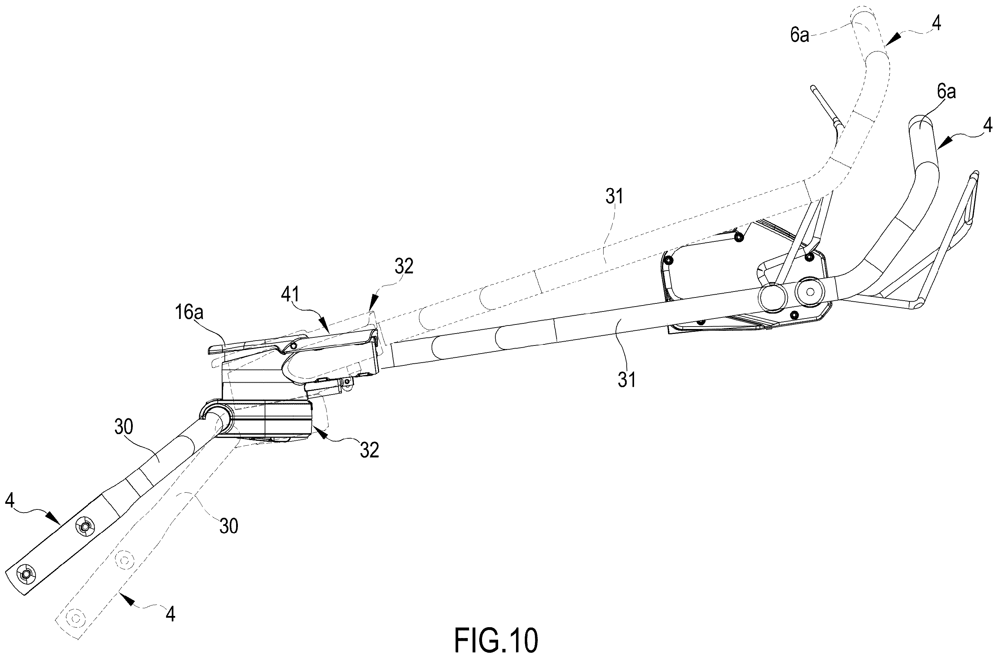

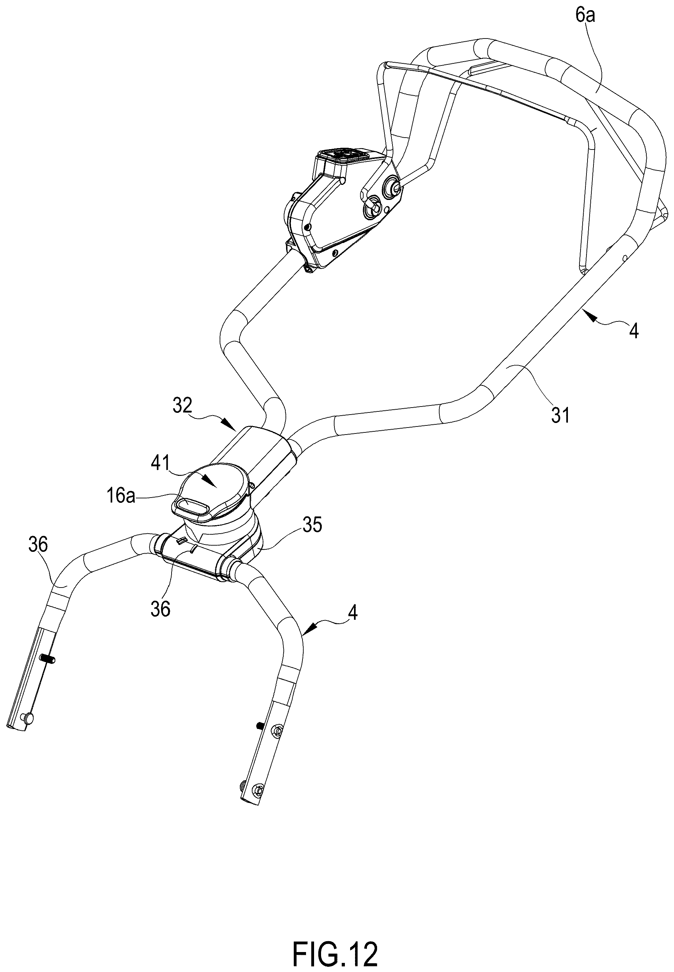

Further, the mobile device 1 may comprise a handle 4 constrained to the frame 3 of the work unit 1a and configured to allow an operator to move and/or direct the mobile device within the work area. The handle 4 extends rearwardly of the frame along an inclined direction and transverse to the frame 3. As will be clarified below, the handle 4 can be made in two pieces, connected to each other by means of a joint 32 which will be subsequently detailed. In an example shown in Figures 10-16, the handle 4 can have a first member 30 constrained to the frame 3 of the device, thus being fixed with respect to the work unit 1a, as well as a second member 31 that can be gripped by the user in a gripping portion 6a, which is connected to the first member 30 through the joint 32 and movable by rotation with respect to the same first member.

The handle 4 can be made of metallic material, for example steel, iron or aluminium, or of plastic or composite material.

In an embodiment variant not shown in the attached Figures, the handle 4 may include a steering wheel or a joystick, mechanically connected to the frame 3 by means of a locking bracket 5, described below. In this configuration, the rotation of the wheels 2 can be electronically controlled by means of signals generated by the steering wheel or the joystick.

As shown in the attached Figures, the handle 4 is fixed to the frame 3 by means of a locking bracket 5, interposed between the frame and the handle itself. In particular, the coupling between the handle 4 and the frame 3 takes place thanks to the connection between the locking bracket 5 and a pin 10 carried by one end of the handle 4. The device may include several locking brackets 5 fixed to the frame 3, which may be coupled to different ends of the handle 4. In one example, one or more locking brackets can provide a through opening 11, which forms a housing for a rotatable body 7 belonging to a control lever 6, by means of which the handle 4 can be fixed to the locking bracket 5. As will be clarified in the following description, the rotatable body 7 of the control lever 6 is responsible for adjusting the inclination of the handle 4 when rotated relative to the frame 3. The movement or blocking of the rotatable body 7 with respect to a locking bracket 5 is carried out by means of a closing knob 9 which can be selectively in contact with the rotatable body 7 of the control lever 6 to block its movement with respect to the frame 3. This closing knob 9 is keyed on the pin 10 carried by the handle 4 to block the rotation of the rotatable body 7 of the control lever 8 and consequently of a gripping portion 8 of the control lever 6, with respect to the frame 3. The closing knob 9 can be configurable between a fixing condition and an adjustment condition. In the fixing condition, the closing knob contacts the rotatable body 7 of the control lever 6 to prevent movement of the handle with respect to the frame 3. Conversely, in the adjustment condition, the closing knob 9 is spaced from the rotatable body 7 of the control lever 6, allowing the gripping portion 8 of the control lever 6 to rotate freely with respect to the frame 3 in a plurality of angular positions, to progressively vary the inclination of the operating handlebar 4. Once the desired position has been reached, the closing knob 9 can be returned to the fixed condition, blocking the rotation of the rotatable body 7 of the control lever 6.

For a better understanding, the functional and structural characteristics of the control lever 6 are now deepened. The lever 6 can be operated by the user to adjust the height, i.e. the inclination, of the handle 4. In the example illustrated in Figure 10, both the first member 30 and the second member 31 of the handle 4 undergo a change in height, for example from a lowered position to a raised position, when the user rotates the control lever 6 about an orientation axis Y. It is important to note that the first and second members 30 and 31 are rigidly connected, allowing them to move together.

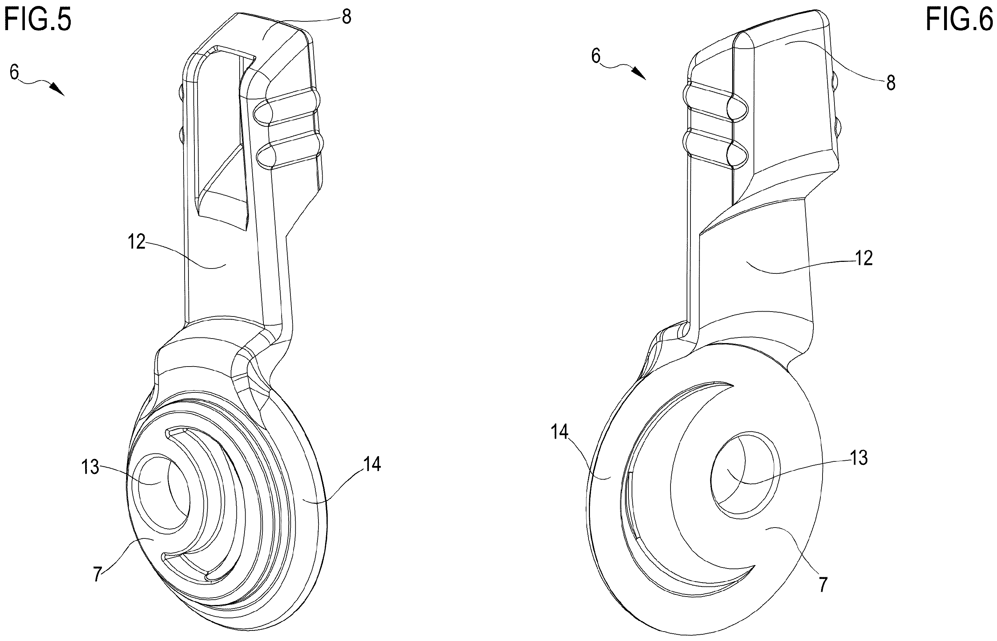

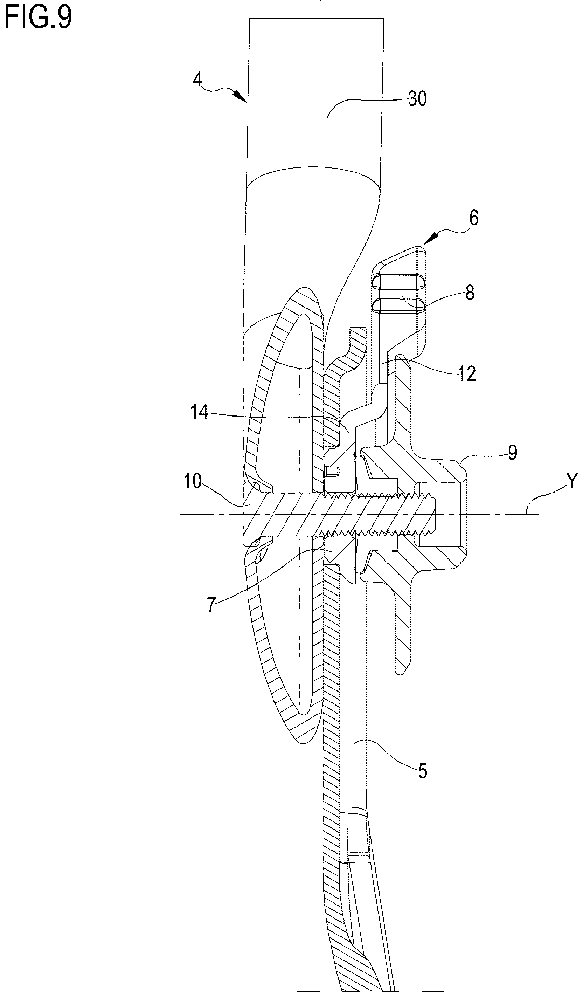

Referring to Figures 2-9 and in particular to the detailed views referred to in Figures 5 and 6, the control lever 6 may comprise a rotatable body 7 having an eccentric hole 13 to which the pin 10 carried by one end of the handle 4 is engageable. The rotation of the rotatable body 7 involves the rotation of the eccentric hole 13 along a circular trajectory and about the orientation axis Y. The eccentricity of the rotatable body is due to the fact that the orientation axis Y does not coincide with a centre of the eccentric hole 13, but with a centre of the through opening 11 of the fixing plate 5. The orientation axis Y, being spaced from the centre of the eccentric hole 13, allows a user to adjust the height, i.e. inclination, of the handle 4 with respect to the work unit 1a, by rotating the control lever 6 about the orientation axis Y.

The control lever 6 and consequently the rotatable body 7, can be located interposed between a locking bracket 5, or the handle 4, and the closing knob 9, along a direction parallel to the orientation axis Y. The movement of the closing knob 9 in the fixing condition allows to keep the control lever 6 in contact with the locking bracket 5, thus preventing any relative movement between the handle 4 and the frame 3. Dually, in the condition for adjusting the closing knob 9, the control lever 6 is no longer locked on the locking bracket 5, being free to move with respect to the frame to adjust the inclination of the handle 4.

Note further how in an example, the rotatable body 7 can be a washer having a substantially flat conformation and on which a hole is made, for example the eccentric hole, which has a centre that is displaced with respect to a centre of the through opening 11 of the locking bracket 5 where said rotatable body 7 is housed.

Still referring to Figures 5 and 6, the control lever 6 may comprise a shoulder 14 extending radially around the rotatable body 7, achieving an axial locking of the same rotatable body when housed inside the through opening 11 of the locking bracket 5. In other words, the shoulder 14 can contact the locking bracket 5 or the frame 3 and prevent a movement of the control lever 6 along a direction parallel to the orientation axis Y of the rotatable body 7.

The control lever 6 can also comprise an intermediate body 12 that emerges from the shoulder 14 to connect the latter with a gripping portion 8 of the control lever 6 subsequently detailed. In one example, the rotatable body 7 may comprise a gripping portion 8 integral with the rotatable body 7 and configured to allow it to rotate with respect to the frame 3 when moved by a user. Note that the gripping portion 8 is movable about the orientation axis Y in any angular position, being freely rotatable about the orientation axis Y, along a circular trajectory, for example equal to or less than 360°C, to cause a contextual variation in height of the handle 4.

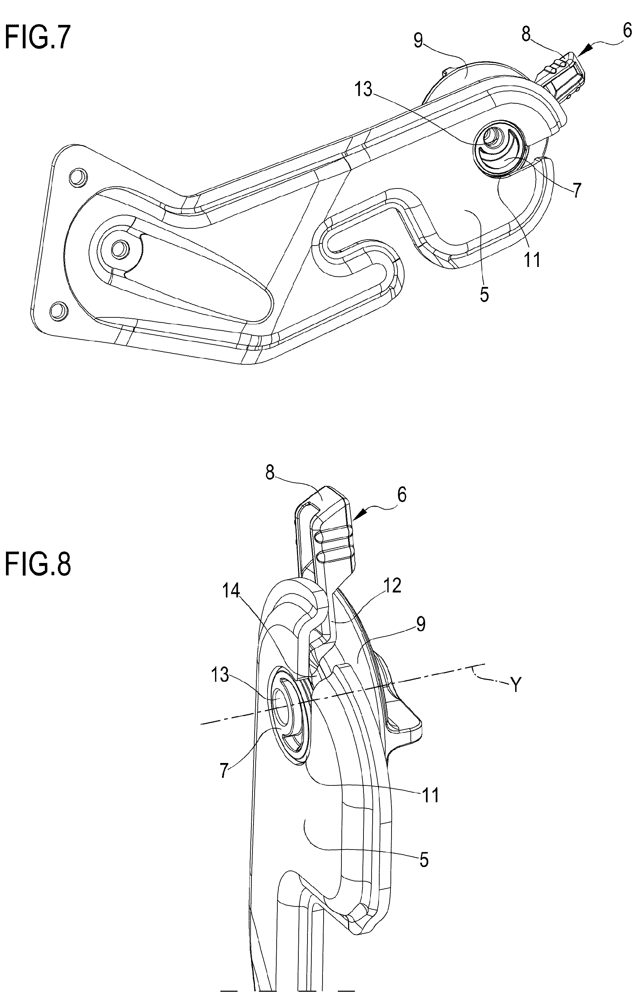

As for example shown in Figures 7, 8 and 9, the gripping portion 8 of the control lever 6 is interposed between the locking bracket 5, or the handle 4, and the closing knob 9, along a direction parallel to the orientation axis Y. Furthermore, the gripping portion 8 of the control lever 6 is positioned radially outside the closing knob 9, defining an end of the control lever 6 located opposite the rotatable body 7. Note how this feature allows the user to easily access the gripping portion 8, both when the closing knob is in the adjustment position and when it is in the fixing position. In this way, it is not necessary to disengage or completely remove the pin 10 of the handle 4 from the locking knob 9 and/or the rotatable body 7 of the control lever 6 before the gripping portion 8 can be used to adjust the height of the handle 4.

Consider how in the attached Figures embodiments have been shown having a control lever 6 positioned only on one end of the handle 5. However, in an embodiment variant in accordance with the present invention, the device may have a plurality of control levers 6 carried by the frame 3 and having respective rotatable bodies 7 with eccentric holes 13 engageable at respective ends of the handle 4.

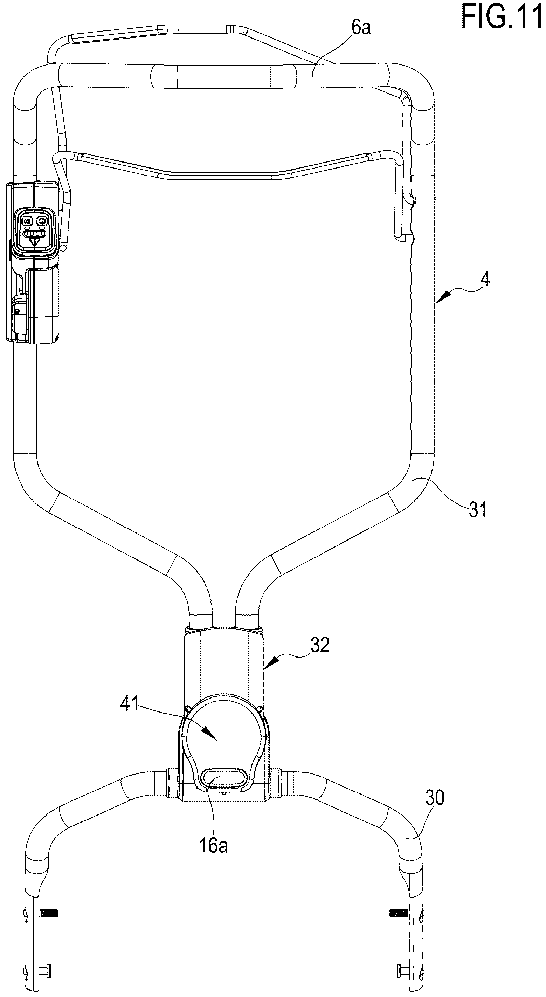

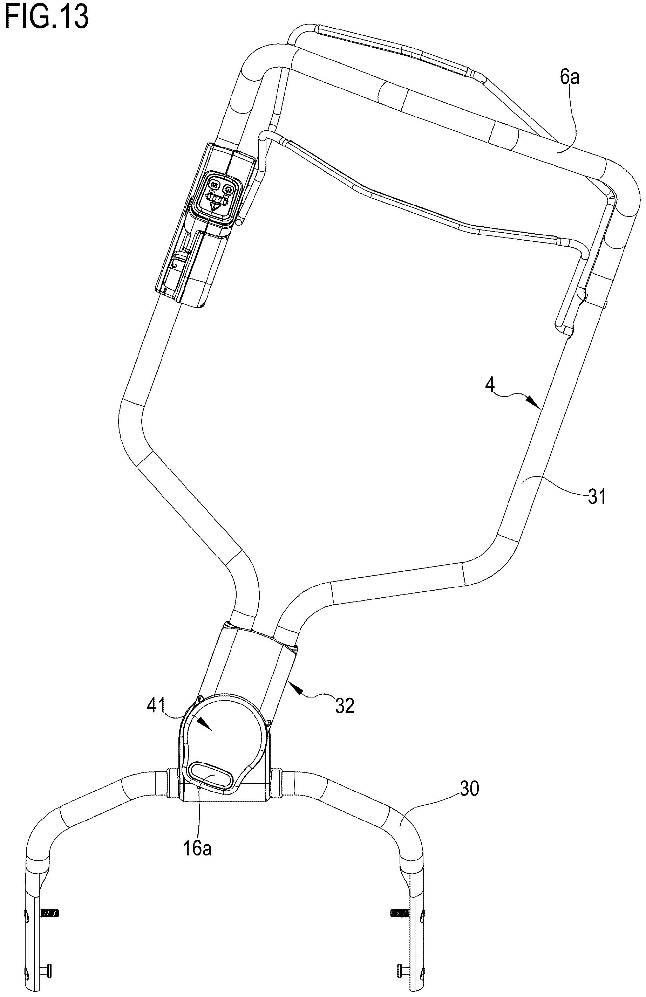

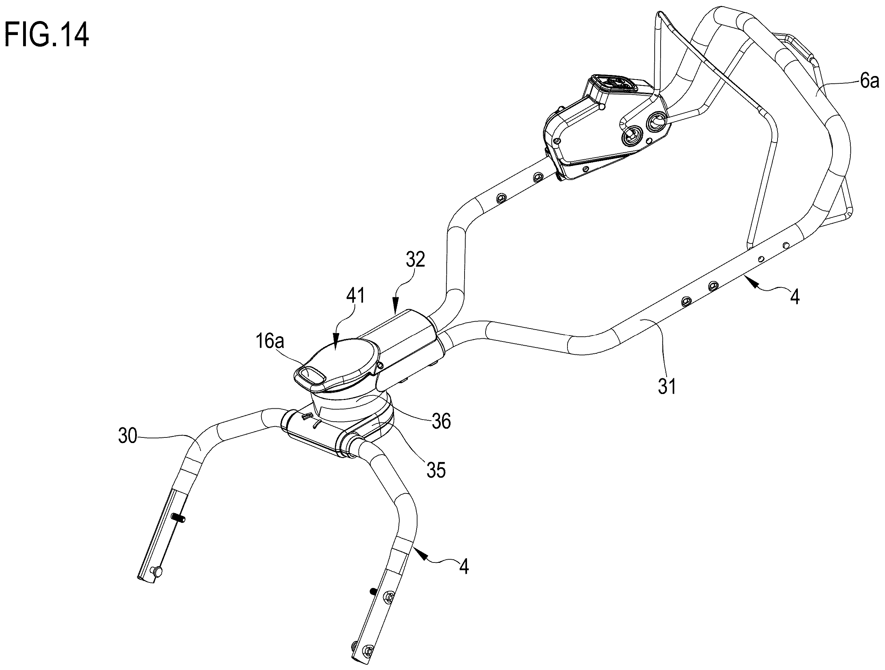

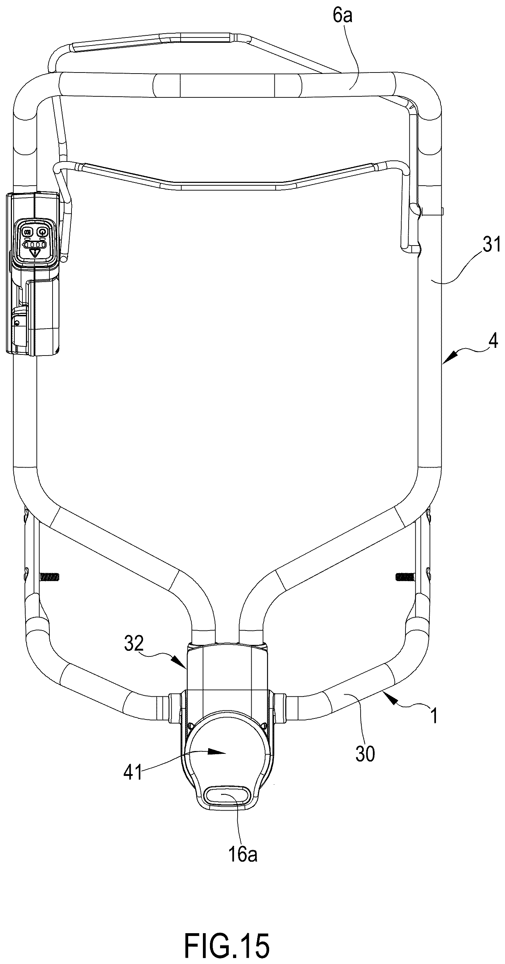

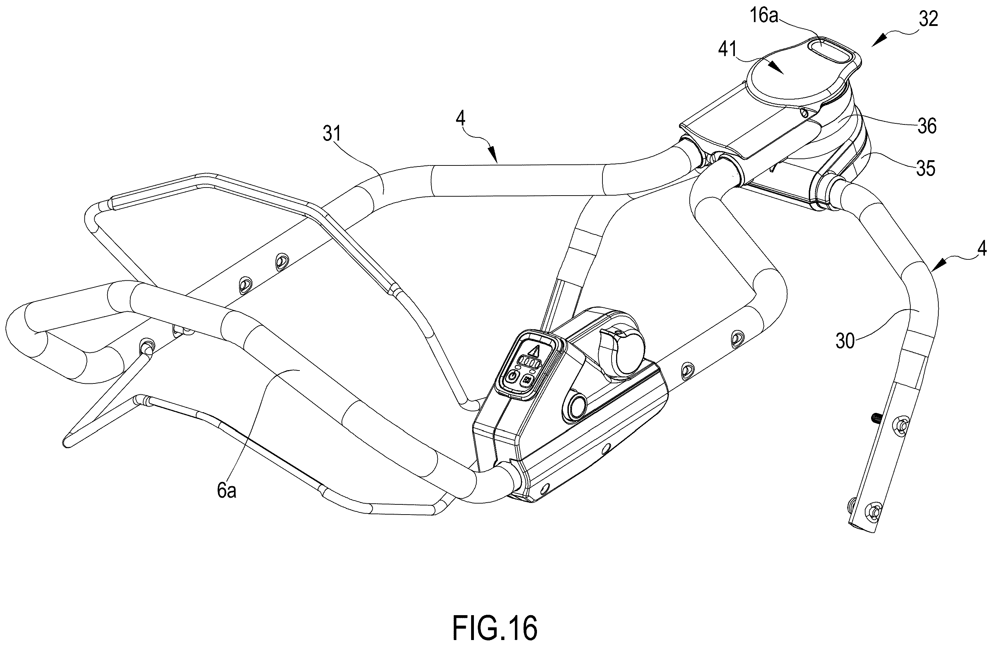

Turning now to describe the components of the device dedicated to carrying out the adjustment of the rotation of the handle 4 with respect to the frame, it should be noted, with reference to Figures 10-16, that the device 1 comprises a joint 32 which, in at least one unlocked condition, rotationally constrains the first member 30 of the handlebar 4 with the second member 31 to perform a relative rotation between the first and second members 30, 31. The movement of the second member 31 of the handle 4, performed thanks to the joint 32, allows the user to avoid any obstacles present along the way in the work area. For example, if the mobile device 1 were to operate in proximity to a hedge, the operator can rotate the handle 4, for example by an angle between 2° and 10°, optionally equal to or less than 5°, keeping the device close to the hedge. However, the possibility of being able to rotate the second member 31 in further angular positions, for example by rotating the second member by 180°, is not excluded. In this regard, see for example Figures 15 and 16, representative of a 180° rotation of the second member 31 with respect to the first member 30, reaching a folded position with minimum bulk. Figures 11-12 instead show a handle 4 in a position of normal use, having the first member 30 longitudinally aligned with the second member 31, representative of a condition in which no type of rotation of the joint 32 has been performed. Figures 13 and 14 instead show the second member 31 rotated with respect to the first member, in a prefixed angular position for example of 5°, with respect to the position of normal use where the first member 30 of the handle 4 is longitudinally aligned with the second member 31.

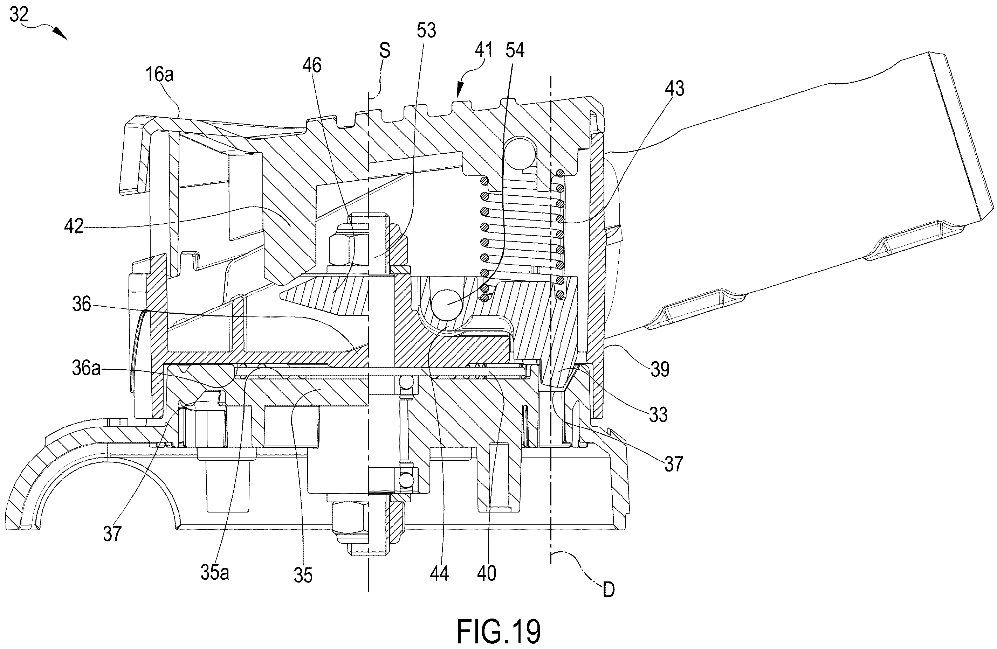

From a structural point of view, the joint 32 can be made up of two overlapping pieces, joined by a coupling element 53, as illustrated in Figures 19, 22 and 25. This element constrains them along a vertical axis, preventing their separation but allowing relative rotation between the two pieces.

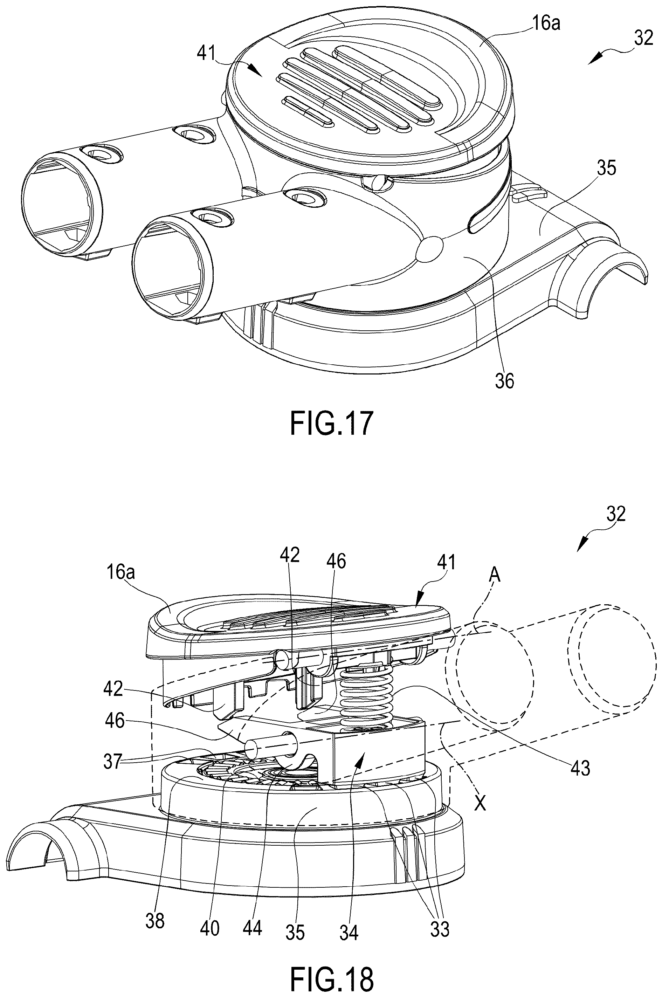

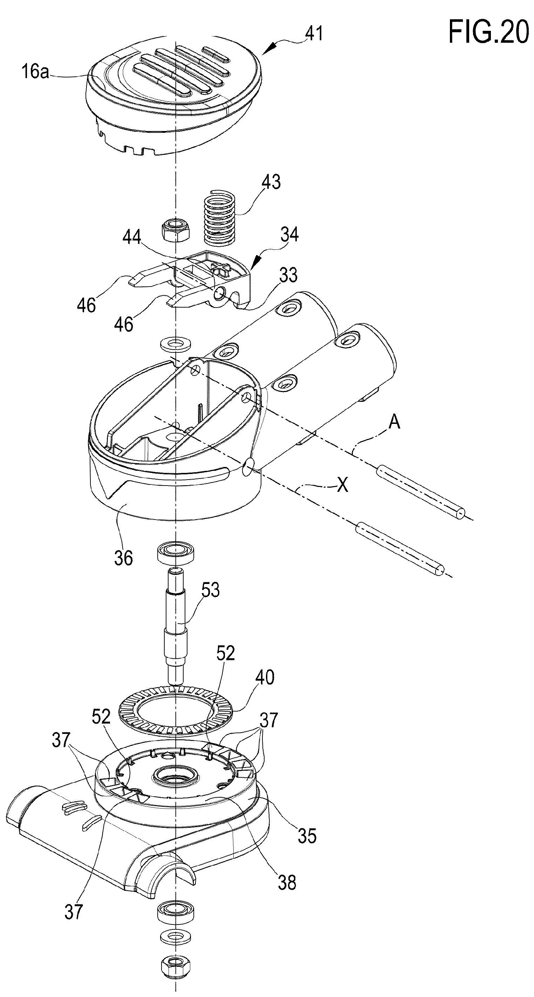

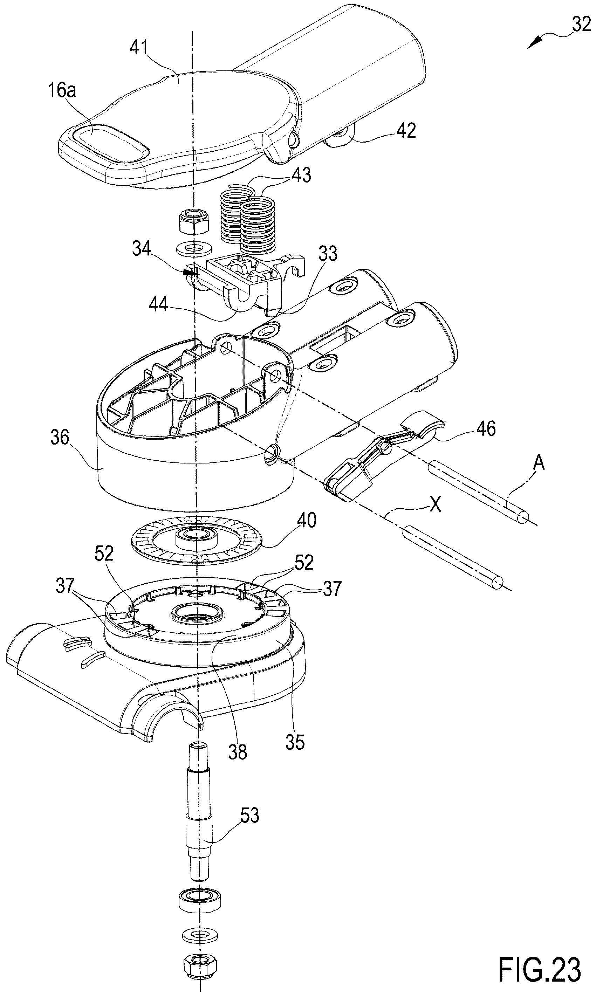

With reference to Figures 17-26, three embodiments relating to a joint 32 will be described. For simplicity in discussion, we will proceed initially with describing the first embodiment shown in Figures 17-20, continuing later with the description of the characteristics of the remaining embodiments that are distinguished from this first embodiment.

In the first embodiment shown in Figures 18 and 19, the joint 32 may comprise a first plate 35 integral with the first member 30 of the handle 4, as well as a second plate 36 integral with the second member 31 of the handle 4 and rotatably movable relative to the first member 30. The first and second plates 35, 36 of the handle 4 may have respective abutment surfaces, indicated as 35a and 36a, which face each other and define a rotation plane for the second plate 36. Said rotation plane is parallel to each of the abutment surfaces 35a and 36a, thus allowing relative rotational movement between the first plate 35 and the second plate 36. Specifically, the second plate 36 of the handle 4 is movable for rotation about a joint axis S transverse, optionally orthogonal, to the rotation plane.

Interposed between the first and second plates 35, 36, the joint 32 may comprise a bearing 40 having opposite faces that contact the respective abutment surfaces 35a, 35b of the first and second plates 35, 36, so as to facilitate relative rotation between the two plates 35, 36.

Note that the joint 32 is configurable in a locked position in which the second plate 36 is fixed with respect to the first plate 35 and an unlocked position in which the second plate 36 is rotatably movable relative to the same first plate 35.

The transition between the locked position and the unlocked position and vice versa is made by the engagement or disengagement of one or more couplings 33 carried by the second plate 36 and configured to selectively engage the first member 30 of the handle 4 to the second member 31 in a plurality of angular positions, preventing a relative rotation between the first plate 35 and the second plate 36 of the joint 32.

We will proceed below by describing the characteristics of the first plate 35 of the joint 32 and then proceed with the description of the characteristics of the second plate 36. Still referring to Figures 18 and 19, the first plate 35 can have a plurality of recesses 37, each of which defines a seat configured to engage a coupling 33 and lock the second plate 36 in specific angular positions with respect to the first plate 35. The recesses 37 are angularly offset from each other by an angle between 2° and 200°, optionally between 5° and 180°, to allow precise adjustment of the angular position of the handle 4 according to the operating needs of the user.

If the second plate 36 of the second member 31 has a plurality of couplings 33, the first plate 35 of the first member 30 may comprise, in each angular position, a plurality of recesses 37 in a number equal to the plurality of couplings 33. For example, the second plate 35 may have two or more recesses 37 for each angular position.

In addition to the recesses 37, the first plate 35 may comprise a sliding track 38, which connects the recesses 37 to each other. The sliding track 38 is configured to guide each coupling 33 during the movement of the second plate 36 with respect to the first plate 35, allowing the movement between two adjacent recesses 37. The slide track 38 further provides for maintaining the joint 32 in the unlocked position when one or more couplings contact the slide track 38. In this scenario, the sliding track 38 prevents the passage of the joint to the locked position until it reaches a further recess 37 to which a coupling 33 is engageable.

Each recess 37 of said plurality and the sliding track 38 can be made on the abutment surface 35a of the first plate 35 of the first member 30 or on a side 35b of the first plate 35 transverse to the abutment surface 35a, depending on the movement trajectory followed by the couplings 33 and variable depending on the embodiment under consideration. The sliding track 38 and the recesses 37 therefore lie on the same surface, where each recess 37 has an access opening 52 to the seat for housing the couplings 33, adjacent to the sliding track 38.

Considering now the second plate 36, the joint 32 may have a plurality of couplings 33 carried by the second plate 36, each configured to selectively engage the first member 30 of the handle 4 to the second member 31, in a plurality of angular positions. In one example, the couplings 33 may have an elongated and terminally pointed conformation to facilitate their insertion into respective recesses 37. In the example shown in Figure 18, the joint 32 has three couplings 33 angularly offset along the same arc of circumference. The provision of a joint 32 having two or more couplings may be advantageous to increase the contact area between the couplings 33 and the first plate 35, thereby strengthening the connection between the first and second plate 35 and 36. Furthermore, the angularly offset arrangement of the couplings 33 prevents unwanted rotations of the second plate 36 and therefore of the second member 31, caused by wear of the couplings 33 or by machining tolerances, further increasing the torsional rigidity of the joint 32.

Each coupling 33 can be movable relative to each other between the first and second plates 35, 36, along a movement trajectory D having at least one straight section parallel to the axis of junction S of the second member 31 or inclined by an acute angle not exceeding 10°. In other words, the couplings 33 are vertically movable in insertion or extraction of the recesses 37. The movement trajectory D of the couplings 33 can therefore be transverse to the rotation plane.

The joint 32 can also comprise a tilting element 34 that carries each coupling 33 and is configured to oscillate with respect to the first plate 35 and the second plate 36, positioning each coupling 33 so as to allow or prevent relative rotation between the first member 30 and the second member 31 of the handle 4. In particular, the tilting element 34 can be engaged to the second plate 36 by means of a rod 54 that allows it to rotate about a rotation axis X parallel to the rotation plane. This movement allows the tilting element 34 to position each coupling 33 in insertion or extraction from a recess 37. The tilting element 34, being carried by the second plate 36, is also integral with the latter during rotation about the joint axis S transverse to the rotation plane, allowing the displacement of each coupling 33 between adjacent recesses 37 to which it can be engaged.

From a structural point of view, the tilting element 34 can include a central body 44 hinged to the second plate 36. In one example, the central body 44 represents the part of the tilting element 34 that connects to the rod 54, which creates the constraint with the second plate 36. The central body 44 of the tilting element 34 can be made in one piece with the couplings 33, which can be located at an end of the same central body 44 opposite to an interaction portion 46 of the tilting element detailed below. Always referring to the embodiment shown in Figures 18 and 19, the tilting element 34 can have an interaction portion 46 connected to the central body 44 and configured to interact with a drive 41, i.e. a body contactable by a user to cause a movement of the tilting element 34 about the rotation axis X and consequently cause the passage of the joint 32 from the locked condition to the unlocked condition.

The interaction portion 46 is an elongated body that emerges from the central body 44 to define a further end of the same central body 44, opposite the couplings 33. In the embodiment shown in Figures 18 and 19, the interaction portion 46 of the tilting element 34 is distinct from the drive 41, being intended to contact the same drive when the latter is contacted, for example moved towards the work area, by the user. In one example, the tilting element 34 may have a plurality of interaction portions 46, i.e. a plurality of protrusions emerging from the central body 44 on the opposite side to the couplings 33 to be contacted by the drive 41, for example when moved towards the work area.

As mentioned, the joint 32 can have a drive 41, accessible to the user to control the position of the tilting element 34, allowing to move from the locked position to the unlocked position of the joint. The drive 41 is carried by the second plate 36 above the tilting element 34, being rotationally movable with respect to the same second plate 36 about a drive axis A parallel to the rotation plane and/or the rotation axis X of the tilting element 34.

The drive 41 can comprise a gripping surface 16a, intended to be contacted by the user, as well as an activation portion 42, which interacts with the interaction portion 46 of the tilting element 34 to move the couplings 33 away from the recesses 37 and allow the rotation of the handle 4. As shown in Figure 18, the activation portion 42 of the drive 41 is a protrusion emerging from the gripping surface 16a of the drive 41 approaching the interaction portion 46 of the tilting element 34. In the embodiment in question, the protrusion of the activation portion 42 of the drive 41 is transverse, optionally orthogonal to the protrusion that defines the interaction portion 46 of the tilting element 34.

The joint 32 may further comprise one or more elastic elements 43, such as springs, acting on the couplings 33 and/or on the tilting element 34 to facilitate the passage of the joint 32 from the unlocked to the locked position, exerting a repulsive force on the couplings 33 in the direction of the recesses 37 to engage them in their respective seats. In the variant of Figure 18, the joint comprises an elastic element 43 that acts in interposition between the drive 41 and the end of the central body 44 of the tilting element 34 where the couplings 33 are located. As mentioned, this elastic element 43 applies a repulsive force on the tilting element 34, having a direction parallel to the joint axis S and/or to the straight section of the movement trajectory D travelled by the couplings 33. In other words, the elastic element 43 plays a role of contrasting the movement of the tilting element 34 when it positions the couplings 33 in extraction from the recesses 37 of the first plate 35. Conversely, the elastic element 43 pushes the tilting element 34 and consequently the couplings 33, on the sliding track 38 when the second member 31 of the handle 4 is partially rotated with respect to the first member 30, or pushes the tilting element 34 to position the couplings 33 in engagement with the recesses 37, causing the joint to pass from the unlocked condition to the locked condition.

From the standpoint of the operation, in order to rotate the second member 31 with respect to the first member 30 of the handle 4, the user must press on the gripping portion 16a of the drive 41. This movement causes the activation portion 42 of the drive 41 to lower, which in turn pushes downwards the interaction portion 46 of the tilting element 34. Since the central body 44 is hinged to the second plate and the couplings 33 are located at the end opposite to the interaction portion 46, the lowering of the latter causes the extraction of the couplings 33 from the recesses 37, thus bringing the joint from the locking to the unlocked condition. At this point, the user can freely rotate the second member 31 to the desired angular position.

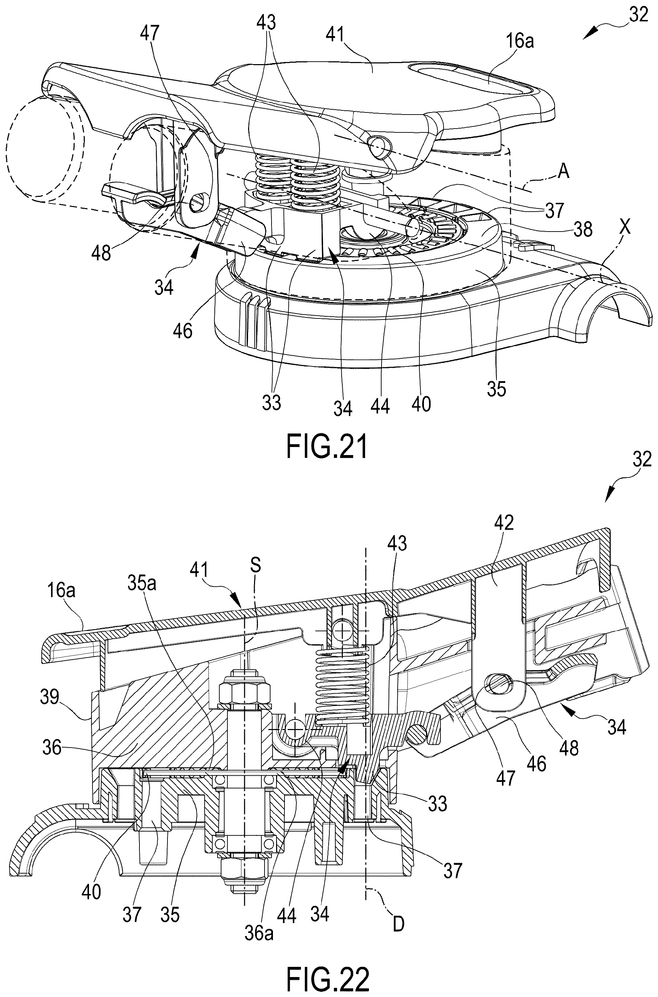

Turning now to the analysis of the second embodiment of the joint shown in Figures 21-23, some variations with respect to the first embodiment are highlighted, mainly related to the structure of the tilting element 34. As for example shown in Figures 21 and 22, the interaction portion 46 of the tilting element 34 is no longer made in one piece with the central body 44, but is constrained to the latter by means of rotational or roto-translational joints. Specifically, the interaction portion 46 is an elongated body that engages, at a first end, the central body 44 of the same tilting element by means of a rotational constraint. Conversely, the elongated body of the interaction portion 46 engages the activation portion 42 of the drive 41 by means of a roto-translational constraint. In this scenario, the interaction portion 46 of the tilting member 34 is configured to rotate relative to the central body 44 of the tilting member 34, while being configured to translate and rotate relative to the drive 41. It should be noted that the relative movement between the interaction portion 46 and the drive 41 is obtained by housing a pin 48 of the same interaction portion 46, inside a slot 47 made on the activation portion 42 of the drive 41, in this case in the form of a plate transverse to the elongated body of the interaction portion 46.

With reference to Figures 21 and 22, the relative position between the various components of the joint 32 is now described, with particular attention to the interaction portion 46 of the tilting element 34, the couplings 33 and the elastic elements 43. As regards the interaction portion 46 of the tilting element, this is spaced from the gripping portion 16a of the same drive 41. In particular, the interaction portion is located opposite the gripping surface 16a of the drive 41 with respect to the central body 44 of the tilting element 34.

The couplings 33 are also made in this embodiment variant in one piece with the central body 44, being located at an end of the central body 44 close to the interaction portion. In one example, the couplings 33 are located in proximity to the rotational joint connecting the central body 44 to the interaction portion 46 of the tilting element 34.

As regards the elastic elements 43, the embodiment in question may have two or more springs acting on the end of the central body 44 of the tilting element 34 where the couplings 33 are located. Also in this embodiment variant, the springs act in interposition between the drive 41 and the central body 44 of the tilting element 34, applying a repulsive force on the couplings 33 to facilitate their insertion into the recesses 37 and consequently cause the joint to pass from the unlocked condition to the locked condition.

From the standpoint of the operation, in order to rotate the second member 31 with respect to the first member 30 of the handle 4, the user must first press on the gripping portion 16a of the drive 41. This movement lifts the end of the drive 41 in which the interaction portion 46 of the tilting element 34 is engaged, which in turn is lifted. As the interaction portion 46 is hinged to the central body 44, the latter rotates, causing the extraction of the couplings 33 from the recesses 37 and thus causing the joint to pass from the locked to the unlocked condition. The user is now free to rotate the second member 31 to the desired angular position.

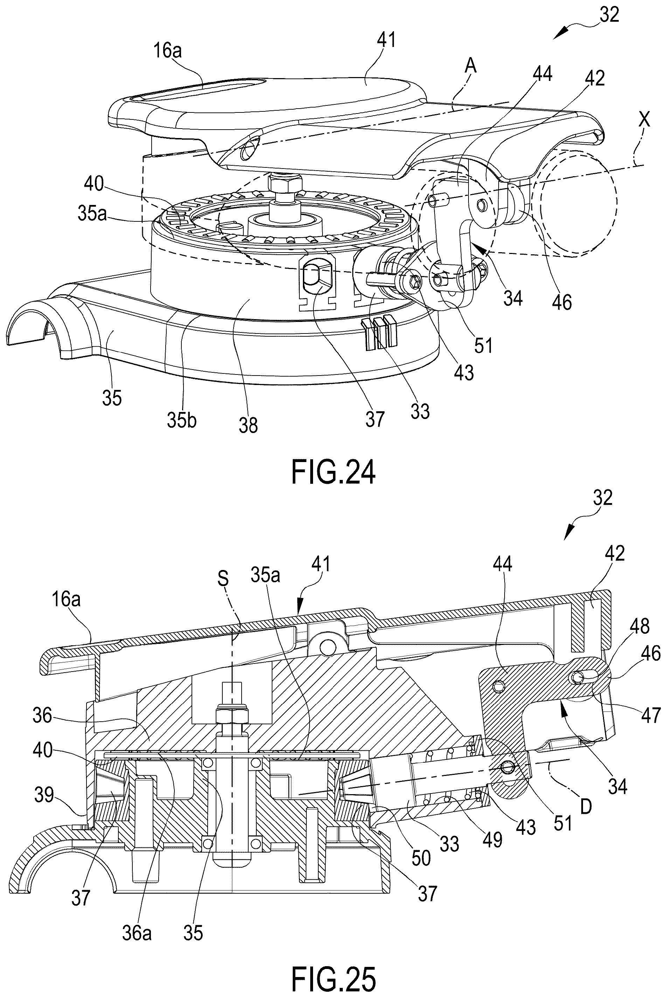

Turning now to the third embodiment shown in Figures 24-26, the tilting element 34 has an "L" or "V" formation where the central body 44 defines a central area of the same tilting element 34, while the interaction portion 46 is located at one end of the tilting element 34. The interaction portion 46 is made in one piece with the central body 44 of the tilting element 34, being engaged with the activation portion 42 of the drive 41, by means of a roto-translational constraint. As in the embodiment variant shown in Figures 21-23, also in this case, the interaction portion 46 of the tilting element 34 has a pin 48 housed inside a slot 47 made on the activation portion 42 of the drive 41. In this case, the interaction portion 46 is configured to rotate integrally with the central body 44 of the tilting element 34 and is configured to translate and rotate with respect to the drive 41.

Note that the activation portion 42 of the drive 41 is spaced from the gripping surface 16a of the same drive 41. In particular, the activation portion 42 is located at an end of the body that defines the drive, opposite the end where the gripping surface 16a is located.

As regards the couplings 33, in the present embodiment they are hinged to an end of the central body 44 opposite to the interaction portion 46 of the tilting element 34, being interposed between the tilting element 34 and the contact surface 16a of the drive 41.

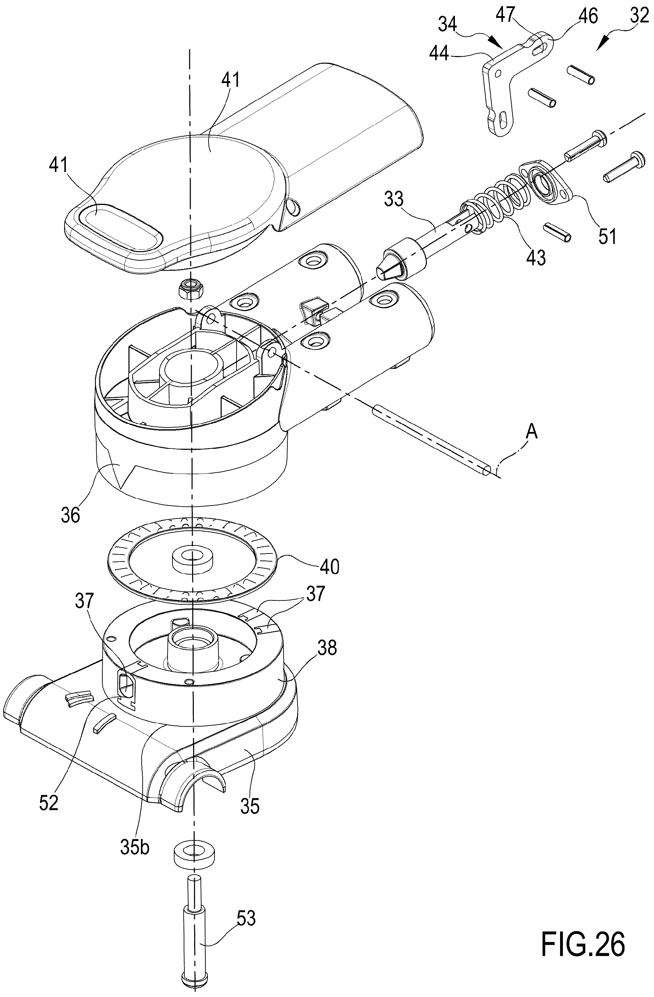

In the present embodiment, the couplings 33 are movable along the rectilinear movement trajectory D transverse to the adjustment plane. In particular, the couplings 33 can be engaged inside recesses 37 made on the side of the first plate 35, contrary to the two previous embodiments where the recesses 37 were made on the abutment surface 35a of the first plate 35. Unlike to what has been previously shown, the second plate 36 of the second member 31 can comprise at least one cylindrical cavity 49 defining a sliding seat of a respective coupling 33. In detail, each cylindrical cavity 49 is terminally delimited, at a first end, by an opening 50 facing a respective recess 37 and configured to allow the passage of a coupling 33 in engagement with a respective recess 37. At a second end opposite to the movement trajectory D of the coupling 33, the cylindrical cavity 49 can be delimited by an end plate 51 defining an end stop of the coupling 33. As shown in Figure 26, the end plate 51 is perforated to allow the passage of the coupling 33 in engagement with the end of the central body 44 of the tilting element 34 to which it is hinged.

In this scenario, each elastic element acts inside the cylindrical cavity 49 of the second plate 36, in interposition between the coupling 33 and the end plate 51.

From the standpoint of the operation, in order to rotate the second member 31 with respect to the first member 30 of the handle 4, the user must first press on the gripping portion 16a of the drive 41. This movement lifts the end of the drive 41 in which the interaction portion 46 of the tilting element 34 is engaged, which in turn is lifted. Since the interaction portion 46 is in one piece with the central body 44, the latter rotates, causing the extraction of the couplings 33 from the recesses 37 and thus causing the joint to pass from the locked to the unlocked condition. The user is now free to rotate the second member 31 to the desired angular position.

### Method of adjusting the inclination of a handle

A further object of the present invention is a method, for example using the device in accordance with the description above and/or in accordance with any of the claims, for adjusting the inclination of a handle 4 of a mobile device. The method initially provides for decoupling the closing knob 5 from the control lever 6, allowing the handle to move freely with respect to the frame 3. Subsequently, the control lever 6 is rotated with respect to the frame 3 to a desired angular position to adjust the position of the rotatable body 7 and by varying the inclination of the handle 4 with respect to the frame 3.

Once the desired angle has been selected, the closing knob 5 is coupled again to the control lever 6, blocking the handle 4 in the selected position. In one example, during the rotation step of the control lever 6 with respect to the frame 3, the pin 10 of the handle 4 remains engaged to the closing knob 9 and/or to the rotatable body 7, without the need for its extraction, neither complete nor partial, from the rotatable body 7 of the control lever 6 or from the closing knob 9.

Once the handle 4 is firmly fixed in the desired position thanks to the new coupling between the closing knob 5 and the control lever 6, the user can proceed with the normal use of the device, taking advantage of the desired inclination of the handle to continue operations on the work area.

### Method for rotationally unlocking a handle

A further object of the present invention is a method, for example using the device in accordance with the description above and/or according to any of the claims, for adjusting the rotation of a handle of a lawn mower device.

This method provides for a first step in which a user contacts the joint 32 to cause the rotation of a tilting element 34, allowing the unlocking of the handle 4. In particular, this is done by pressing a gripping surface 16a on the drive 41, which causes the rotation of the tilting element 34 and the consequent passage of the joint 32 from the locked to the unlocked position. Following this movement, one or more couplings 33 that keep the handle locked disengage from the first member 30 of the same handle 4, allowing the second member 31 to rotate freely with respect to the first member 30.

Once the unlocking has been completed, the method may provide for the possibility of freely adjusting the rotation of the handle. During this rotation, the couplings 33 slide along a sliding track 38 that guides the movement until they reach a series of recesses 37. When the handle reaches one of the recesses 37, the couplings 33 engage again, locking the handle in the new inclined position.

At this point, thanks to the action of elastic elements 43, the couplings 33 engage stably in respective recesses 37, allowing the user to release the drive 41 and to continue cutting the work area with the handle fixed in the new angular position.

## Claims

1. Mobile device for the maintenance of lands, in particular lawns or gardens, comprising:
- movement means (2) configured to allow a movement of the mobile device within a work area,
- a frame (3) comprising at least one work tool for performing maintenance operations on the work area,
- a handle (4) configured to allow an operator to guide and optionally move said mobile device within the work area,
- at least one control lever (6) carried by the frame (3) and comprising:
∘ a rotatable body (7) having an eccentric hole (13) to which an end of the handle (4) is engageable, said rotatable body (7) being rotatably movable relative to the frame (3) about an orientation axis (Y),
∘ a gripping portion (8) integral with the rotatable body (7) and configured to allow it to rotate with respect to the frame (3) when operated by an operator,
- a closing knob (9) selectively in contact with the rotatable body (7) of the control lever (6) to block its rotation with respect to the frame (3),
wherein the gripping portion (8) of the control lever (6) is interposed between the handle (4) and the closing knob (9) along a direction parallel to the orientation axis of the rotatable body (7).

2. Device according to the preceding claim, wherein the closing knob (9) can be configured between:
- a fixing condition in which said closing knob (9) contacts the rotatable body (7) of the control lever (6) to prevent movement of the handle (4) with respect to the frame (3),
- an adjustment condition in which the closing knob (9) is spaced from the rotatable body (7) of the control lever (6), allowing the gripping portion (8) of the control lever (6) to rotate freely with respect to the frame (3) in a plurality of angular positions, so as to progressively vary the inclination of the operating handlebar (4).

3. Device according to the preceding claim, wherein the operating handlebar (4) is engaged to the rotatable body (7) of the control lever (6) by means of a pin (10), optionally a threaded bolt, wherein the control lever (6), in the condition of adjustment of the closing knob (9), moves the pin (10) along a circular trajectory to cause a contextual variation in height of the handlebar (4).

4. Device according to any one of the preceding claims, wherein the gripping portion (8) of the control lever (6), optionally in the condition of adjustment of the joint (7), is rotatable relative to the frame (3) along a circular trajectory, optionally said gripping portion (8) of the control lever (6) travelling along a 360° angle.

5. Device according to the two preceding claims, wherein the circular trajectory travelled by the gripping portion (8) of the control lever (6) is concentric to the circular trajectory travelled by the pin (10).

6. Device according to any one of the preceding claims, wherein the gripping portion (8) of the control lever (6) is positioned radially externally to the closing knob (9).

7. Device according to any one of the preceding claims, wherein the gripping portion (8) of the control lever (6) defines an end of the control lever (6) located opposite the rotatable body (7).

8. Device according to any one of the preceding claims, wherein the control lever (6) comprises:
- a shoulder (14) extending radially around the rotatable body (7), said shoulder being configured to contact the frame (3) and prevent a movement of the control lever (6) along a direction parallel to the orientation axis (Y) of the rotatable body (7),
- an intermediate body (12) connecting the gripping portion (8) to the shoulder (14).

9. Device according to any one of the preceding claims comprising at least one fixing bracket (5) constrained to the frame (3) and couplable to the handle (4) by means of the control lever (6), optionally by means of the rotatable body (7) of the control lever (6),
wherein the fixing bracket (5) has a through opening (11) defining a seat for housing the rotatable body (7) of the control lever (6).

10. Device according to the preceding claim, wherein the through opening (11) is delimited by a perimeter edge defining a sliding guide of the rotatable body (7) when rotated relative to the frame (3).

11. Device according to any one of the preceding claims comprising a plurality of control levers (6) carried by the frame (3) and having respective rotatable bodies (7) with eccentric holes (13) in which respective ends of the handle (4) are engageable, each control lever (6) having a gripping portion (8) integral with a respective rotatable body and configured to allow rotation of the rotatable body with respect to the frame (3) when operated by an operator.

12. Device according to any one of the preceding claims comprising a plurality of fixing brackets (5) constrained to the frame (3) and couplable at the end of the handle (4) by means of a respective control lever (6).

13. Method for adjusting the inclination of a handle (4) of a mobile device according to any one of the preceding claims, said method comprising the following steps:
- decoupling the closing knob (5) from the control lever (6) to allow it to move with respect to the frame (3),
- rotating the control lever (6) with respect to the frame (3) at any one of a plurality of angular positions to adjust the position of the rotatable body (7) and vary the inclination of the handle (4) with respect to the frame (3),
- coupling again the closing knob (5) to the control lever (6) to block the handle (4) in the selected position

14. Method according to the preceding claim using the device according to claim 3, wherein during the step of rotating the control lever (6) with respect to the frame (3) the pin remains engaged with the closing knob (9) and/or the rotatable body (7).

15. Method according to any one of the two preceding claims, wherein the step of rotating the control lever (6) with respect to the frame (3) does not provide for the extraction, either complete or partial, of the pin (10) from the rotatable body (7) of the control lever (6) and/or from the closing knob (9).
